# FASCICULE DE BREVET EUROPEEN

(11) **EP 0 884 704 B1**
(45) Date de publication et mention de la délivrance du brevet: **11.10.2000**
(21) Numéro de dépôt: 98401386.2
(22) Date de dépôt: 09.06.1998
(51) Int. Cl.: G07F 7/12, G06K 19/073

(54) **Procédé d'authentification de circuit intégré**
Beglaubigungsverfahren für integrierte Schaltung
Integrated circuit authentication method

(30) Priorité: 10.06.1997 FR 9707190
(43) Date de publication de la demande: 16.12.1998
(73) Titulaire: STMicroelectronics S.A., 94250 Gentilly (FR)
(72) Inventeur: Tailliet, François, 94230 Cachan (FR)
(74) Mandataire: Ballot, Paul

(56) Documents cités:
- EP-A- 0 186 038
- EP-A- 0 313 967
- EP-A- 0 321 728
- EP-A- 0 602 643
- FR-A- 2 640 061

## Description

L'invention concerne un procédé d'authentification de circuit intégré.

On connaît l'utilisation de registres pour contenir une signature interne d'un circuit intégré, sous la forme d'un mot binaire. Cette signature interne est utilisée dans certains cas pour identifier le type ou l'origine du produit, pour permettre une utilisation adaptée : temps d'accès, durée de l'impulsion de programmation de données en mémoire. Dans d'autres cas, il s'agit d'authentifier le circuit dans son application. On pense en particulier aux produits de type carte à puce et dérivés. La signature interne consiste alors dans des informations du type numéro de série et clef, pour être utilisées par un algorithme de cryptographie apte à fournir un certificat d'authentification. Si la carte n'est pas authentifiée par le système applicatif (lecteur de carte), elle est rejetée. Il s'agit là de lutter contre la falsification de cartes et contre l'accès frauduleux à des données confidentielles contenues dans ces cartes.

La procédure d'authentification fait partie intégrante du protocole d'échange entre la carte et le système applicatif (lecteur), la sécurisation du système d'authentification étant obtenue par le choix de l'algorithme de cryptographie et par le fait que les données confidentielles ne sortent pas de la carte. Ces données sont par ailleurs dissimulées dans la carte, par des moyens de mélange d'adresse, de codage de données (permutations) ou autres.

Entre la simple identification et l'authentification très sécurisée de circuits, on a découvert un besoin intermédiaire d'authentification de circuits pour empêcher la diffusion de copie de circuits. Ces circuits concernent des applications courantes et pas nécessairement des applications dites sécurisées. Dans ces applications, on veut identifier de manière certaine, c'est à dire authentifier, l'origine de ces circuits.

Ce besoin apparaît du fait notamment de la miniaturisation poussée des circuits intégrés, qui empêche le marquage externe des boîtiers et des progrès technologiques qui, malgré les efforts importants des fabricants de circuits intégrés pour trouver des solutions techniques propres à empêcher la copie des circuits intégrés, permettent avec plus ou moins de difficultés la copie de ces mêmes circuits ou au moins de certains d'entre eux. Tout ceci est exacerbé par l'utilisation de plus en plus courante, dans tous les domaines, des circuits intégrés, du fait de leur miniaturisation, de leur faible consommation, de leur faible coût...

Dans l'invention, on a cherché un procédé d'authentification qui ne s'inscrive pas dans une procédure particulière comme pour la cryptographie. De cette manière, l'authentification se fait de manière transparente pour un observateur extérieur, ce qui permet un procédé plus simple, tout en étant très sûr.

La solution trouvée à ce problème technique consiste à utiliser les instructions normales du circuit intégré utilisées dans le programme applicatif, pour déclencher une modification (temporaire) d'une réponse au moins du circuit intégré, sur détection d'un scénario d'activation dans la séquence des instructions reçues par le circuit intégré, la modification de la réponse n'entraînant pas de mauvais fonctionnement du circuit intégré. Selon l'invention, ces modifications sont effectuées sur le chemin d'exécution d'une instruction au moins du circuit intégré.

Dans un exemple, un scénario peut consister en huit instructions de lecture et trois instructions d'écriture en mémoire du circuit intégré à n'importe quelle adresse, et la modification peut consister à inverser les bits de la donnée lue pour la prochaine instruction de lecture. Le système applicatif connaît le scénario. Il est apte à le détecter et à vérifier que la modification a bien lieu. Dans l'exemple, il suffit de refaire la lecture et de comparer les deux données lues.

Un utilisateur non averti ne se rend compte de rien.

Si le système applicatif constate qu'il n'y a aucune modification de comportement, il n'authentifie pas le circuit. De préférence, pour empêcher tout lien de cause à effet, il génère une alarme au bout d'un certain temps après la détection de l'anomalie, par exemple après 20 cycles de lecture.

Selon l'invention, des moyens de modification d'une réponse sont placés sur le chemin d'exécution d'une ou plusieurs instructions du circuit intégré.

La modification d'une réponse du circuit intégré peut être de toute nature, pourvu qu'elle ne mette pas hors fonctionnement le circuit intégré dans son application et qu'elle soit mesurable par le système applicatif. Il peut s'agir d'un temps de réponse d'une instruction particulière d'une donnée échangée ou autres. Les moyens de modification utilisés dans le circuit intégré peuvent être des circuits à retard du type RC ou autres, des bascules, des diviseurs de fréquence d'horloge, des circuits de permutation de données, sans que la liste soit exhaustive.

Les moyens de détection peuvent comprendre des compteurs, pour compter le nombre de cycles instructions (lecture, écriture), des circuits combinatoires par exemple pour détecter une combinaison particulière de bits d'une adresse.

Tous les circuits utilisables pour mettre en oeuvre le procédé d'authentification selon l'invention sont bien connus de l'homme de métier.

L'invention est présentée de manière plus détaillée dans la description suivante faite à titre indicatif et nullement limitatif dans un exemple d'application du procédé d'authentification à un circuit intégré à mémoire illustré dans les dessins annexés, dans lesquels :
- la figure 1 représente une mémoire en circuit intégré à accès parallèle comprenant des moyens de mise en oeuvre du procédé d'authentification selon l'invention;
- la figure 2 représente schématiquement un exemple de circuit de détection d'un scénario d'activation;
- la figure 3 représente un exemple de circuit de modification d'une réponse de la mémoire de la figure 1 et
- la figure 4 représente un dispositif de détection et de modification basé sur un signal d'horloge, pour un exemple d'application de l'invention à un circuit intégré à accès série.

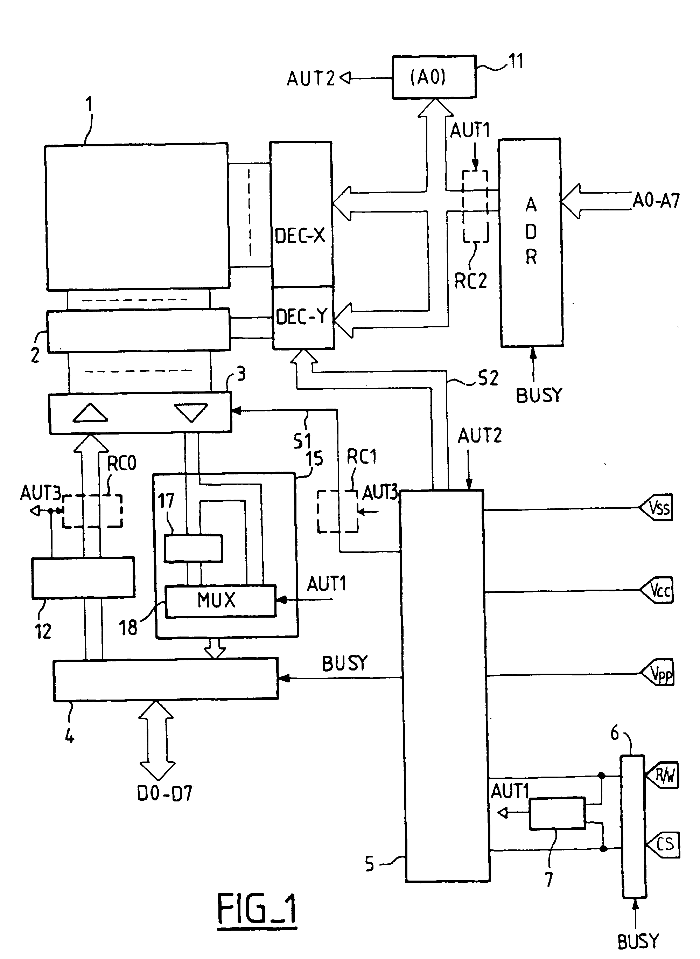

La figure 1 représente une mémoire en circuit intégré à laquelle peut s'appliquer le procédé d'authentification selon l'invention. Dans l'exemple, il s'agit d'une mémoire électriquement programmable, du type Eprom, EEprom, flash Eprom, à accès parallèle. Mais l'invention s'applique à tous types de circuit intégré et à tous types de mémoire (Ram ou autres). L'interface externe comprend des bornes d'alimentations logiques Vcc et Vss, une borne de haute tension Vpp pour la programmation et différentes bornes pour recevoir des signaux de commande dont un signal de sélection de boîtier CS, un signal de lecture/écriture R/W. L'interface externe comprend aussi des bornes d'entrée d'adresses A0-A7 et des bornes d'entrée/sortie de données D0-D7.

Le circuit intégré comprend un plan mémoire 1 organisé en lignes de bit et lignes de mot dont l'accès se fait au moyen de décodeurs d'adresse. On a ainsi un décodeur de rangées (ou lignes de mot) DEC-X et un décodeur de colonnes (ou lignes de bit) DEC-Y. Le décodeur de colonnes commande un circuit portes 2 qui transmet les données à écrire ou les données lues de ou vers un circuit 3 à amplificateurs d'écriture/lecture qui est relié à un registre 4 bidirectionnel trois états de l'interface externe, pour l'entrée/sortie des données D0-D7. Les décodeurs DEC-X et DEC-Y sélectionnent les lignes de bit et la ligne de mot correspondant à l'adresse qui leur est présentée par un registre d'adresse ADR qui reçoit les signaux d'adresses A0-A7 de l'interface externe. Le registre ADR est du type monodirectionnel, trois états.

Un circuit de commande 5 est enfin prévu, qui reçoit les différents signaux de commande R/W , CS et les alimentations Vcc, Vss et Vpp pour séquencer les différents éléments du circuit intégré et fournir (S2) les niveaux de tension appropriés à appliquer sur les lignes de bit et les lignes de mot du plan mémoire, en fonction des signaux de commande reçus.

Exceptés les alimentations nécessaires pour le fonctionnement opérationnel du circuit intégré, les autres signaux de commande R/W et CS, d'adresses A0-A7 et d'entrée/sortie de données D0-D7 sont connectés dans le circuit intégré à des registres trois états mono ou bidirectionnels. On a ainsi un registre 6 pour les signaux de commande R/W et CS, le registre ADR pour les signaux d'adresse A0-A7 et le registre bidirectionnel 4 pour les signaux de données D0-D7.

Dès qu'une nouvelle instruction est prise en compte par le circuit de commande 5 du circuit intégré, il place ces registres en haute-impédance côté interface externe, pour empêcher la prise en compte de toute nouvelle instruction tant que l'instruction courante n'est pas terminée. Pour cela, il active un signal de mise en état de haute impédance, noté BUSY. Dès que l'instruction est terminée, il relâche ce signal. Si l'instruction courante était une lecture, la donnée lue est alors transmise en sortie du registre 4 d'entrée/sortie de données vers l'interface externe D0-D7.

Le fonctionnement d'une telle mémoire en circuit intégré est bien connu et ne sera donc pas détaillé plus avant.

Dans le procédé d'authentification de circuit selon l'invention, on prévoit qu'un scénario d'activation pré-établi obtenu du déroulement d'un programme applicatif d'utilisation du circuit intégré déclenche une modification d'une réponse au moins dudit circuit. Cette modification apparaît de manière intermittente, apparemment aléatoirement pour un observateur extérieur, chaque fois que le scénario d'activation peut être détecté par le circuit intégré.

Le circuit intégré comprend donc des moyens de détection d'un scénario d'activation au moins.

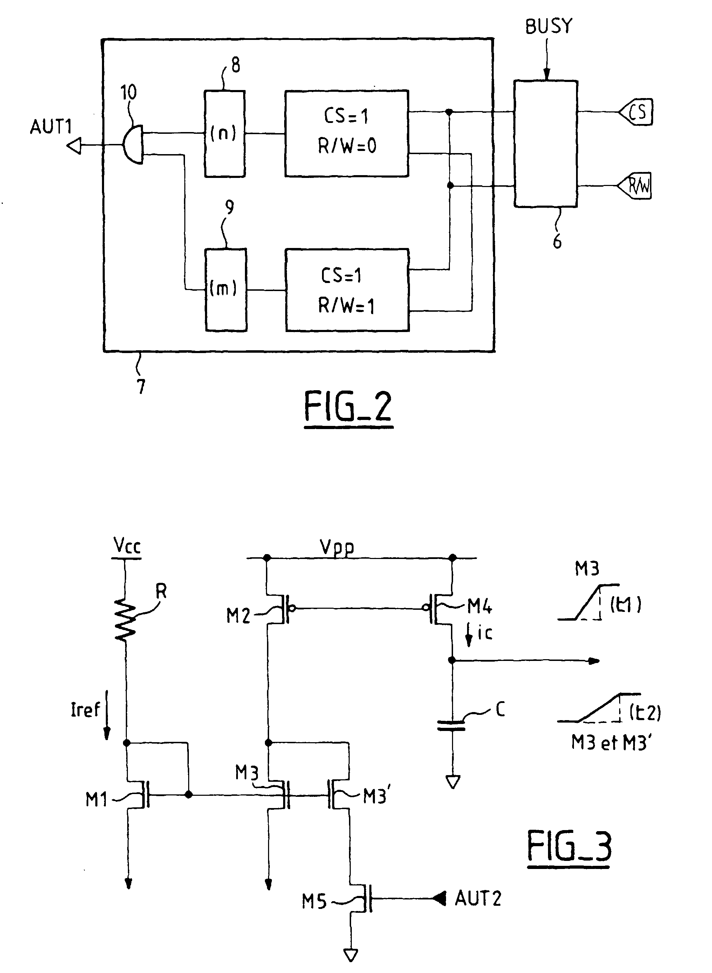

Si ce scénario consiste en un nombre déterminé de commandes de lecture ou de commandes d'écriture, ces moyens de détection placés derrière le registre 6 sur la figure 1 comprendront dans un exemple schématiquement représenté sur la figure 2, un premier compteur 8 d'un nombre n pour compter les instructions de lecture (CS, R/W = 0) et un deuxième compteur 9 d'un nombre m pour compter les instructions d'écriture (CS=1, R/W=1), les sorties des deux compteurs étant combinées dans un circuit combinatoire 10 pour fournir un premier signal d'activation d'authentification AUT1.

Un autre scénario possible peut consister dans une combinaison particulière de bits d'une adresse sur laquelle porte l'instruction courante. Les moyens de détection peuvent alors comprendre des moyens combinatoires 11 placés en sortie du registre d'adresse ADR. Dans un exemple particulièrement simple, le scénario d'activation consiste en la présence d'une adresse impaire. Un signal d'activation AUT2 est alors simplement fournit par le bit d'adresse A0, comme représenté sur la figure 1.

On peut très bien utiliser des moyens de détection semblables 12 en entrée du registre 4 des données, pour détecter une combinaison particulière des bits de données appliqués en entrée et délivrer un signal de détection correspondant AUT3.

D'autres scénarios sont possibles. Le procédé d'authentification peut utiliser un ou plusieurs scénarios combinés pour fournir un seul signal d'activation ou pour fournir différents signaux d'activation, à différents moyens de modification, selon le degré de fiabilité et complexité recherché. Des bascules peuvent être utilisées pour mémoriser l'occurrence de différents scénarios, pour combiner entre eux différents scénarios, selon un ordre d'apparition déterminé ou non, des moyens de ré-initialisation des bascules devant alors être prévus.

Dans l'exemple représenté, on a trois moyens de détection respectivement qui fournissent chacun un signal d'activation, respectivement AUT1, AUT2 et AUT3.

Ces signaux d'activation activent des moyens de modification d'au moins une réponse du circuit intégré.

Ces moyens de modifications selon l'invention sont placés sur le chemin d'exécution d'une instruction au moins du circuit intégré.

Ces moyens de modification d'une réponse comprennent dans un premier exemple représenté sur la figure 3 un circuit apte à modifier le temps de montée de la rampe de tension de programmation, dans le cas d'une application à une mémoire EEPROM.

Un circuit de génération de la rampe de tension de programmation comprend habituellement un générateur de courant de référence Iref apte à fournir un courant de charge Ic à un condensateur C dont une borne délivre la rampe de tension désirée. En faisant appliquer un courant supplémentaire de charge, on modifie le temps de montée de la rampe, soit en le diminuant, soit en l'augmentant.

Dans un exemple de réalisation pratique, on a par exemple un générateur de courant Iref comprenant une charge R alimentée sous tension Vcc en série avec un transistor M1 relié à la masse et ayant sa grille reliée à son drain. Un circuit de charge d'un condensateur C, comprend une première branche avec deux transistors M2 et M3 en série entre la haute tension de programmation Vpp et la masse. La grille du transistor M3 est commandée par la grille du transistor M1, en sorte que le transistor M3 conduise un courant égal à K.Iref, par effet mémoire de courant, où K est le rapport des géométries entre les transistors M3 et M1.

Le circuit de charge comprend une deuxième branche comprenant un transistor M4 en série avec le condensateur C, entre la haute tension de programmation Vpp et la masse. Le transistor M4 est commandé par le transistor M3 par effet miroir de courant (grille et drain du transistor M2 reliés) pour conduire le courant K.Iref (à un facteur de proportionnalité près). Le condensateur se charge progressivement à Vpp sous ce courant K.Iref. Le niveau Vpp est atteint au bout d'un temps t1.

Dans l'invention, on prévoit un autre transistor M3' en parallèle sur le transistor M3 de la première branche pour conduire par effet miroir de courant avec le transistor M1, un courant K'.Iref. Ce transistor M3' est activé en le reliant à la masse par un transistor de sélection M5 dont la grille est activée par un signal d'activation, dans l'exemple le signal AUT2.

Quand le transistor M5 est activé, le transistor M3' fait augmenter le courant de charge du condensateur conduit par le transistor M4, qui devient égal à K.Iref + K'.Iref. Le temps t2 de montée de la rampe de tension devient plus court (t2<t1). La programmation est plus rapide, ce qui peut être mesuré facilement par le système applicatif, puisque le circuit intégré pourra prendre en compte une nouvelle instruction beaucoup plus rapidement (temps de réponse plus court, BUSY relâché plus rapidement). Par exemple, si le temps de montée de la rampe est de l'ordre de 1,5 milliseconde en opérationnel et que la plage de valeurs acceptables pour cette caractéristique du circuit va de 1 à 2 millisecondes, les moyens de modification sont calibrés pour que le temps de montée modifié soit de l'ordre de 1 milliseconde.

Dans l'exemple, ce circuit de modification est activé sur la détection d'une adresse impaire, par le signal AUT2 (A0=1). Dans ce cas, la modification ne sera effective que si l'instruction courante est une instruction de programmation. Sinon elle est sans effet. Cela revient à dire que le scénario d'activation comprend deux détections combinées en séquence. On pourrait prévoir d'activer la modification par la détection combinée d'une opération d'écriture (R/W=1) et d'une adresse impaire (A0=1).

Un autre circuit de modification d'une réponse du circuit intégré peut consister en un circuit de modification d'une donnée. Dans l'exemple, on prévoit un circuit 15 de permutation de données et de multiplexage devant le registre 4 de sortie de données.

La donnée en sortie de la mémoire est appliquée en entrée du circuit de permutation 17 et sur une entrée du multiplexeur 18. L'autre entrée du multiplexeur reçoit la sortie du circuit de permutation. La sortie du multiplexeur est appliquée au registre de sortie de données. L'entrée sélectionnée par défaut dans le multiplexeur est la sortie de la mémoire. L'autre entrée n'est sélectionnée que sur activation d'un signal d'activation, correspondant à la détection d'un scénario pré-établi. Dans l'exemple les moyens de modification 15, 17 sont activés par le signal AUT1. Le système applicatif connaît la permutation et est donc à même de "mesurer" la modification de la réponse. Dans le cas représenté, la modification n'a lieu que si l'instruction courante est une lecture. Sinon, il ne se passe rien. Tout concourt de cette manière à rendre aléatoire la modification et donc à rendre le procédé d'authentification transparent pour un utilisateur.

Au lieu d'un circuit 17 de permutation, on peut prévoir à la place un circuit pour retarder la sortie de la donnée sur les broches externes d'entrée/sortie de données. La mesure de la modification consistera alors pour le système applicatif dans la mesure du temps de réponse, c'est à dire du temps au bout duquel la donnée est disponible sur le bus d'entrée/sortie externe de données.

Dans un autre exemple représenté en pointillé sur la figure 1, on peut placer un circuit à retard RC0 entre la sortie du circuit de détection 12 et l'entrée du circuit d'amplification de lecture/écriture, activés par exemple par le signal d'activation AUT3, pour imposer un retard dans la prise en compte par l'instruction courante de la donnée présentée par le bus externe de données, quand un scénario d'activation correspondant est détecté. Il faut comprendre par circuit à retard RC0 un circuit à retard proprement dit, du type RC ou autres et un multiplexeur qui permet de sélectionner le chemin normal sans retard ou celui modifié avec retard.

On peut encore placer un circuit à retard RC1 sur la commande S1 d'activation du circuit 3 d'amplificateurs de lecture/écriture, activé par le signal d'activation AUT3, ou un circuit à retard RC2 en sortie du registre d'adresse ADR, commandé par le signal d'activation AUT1.

Dans le cas d'un circuit à accès série, un signal intéressant à utiliser sera le signal d'horloge. Ce signal pourra être utilisé pour le scénario de détection ou pour la modification selon l'invention.

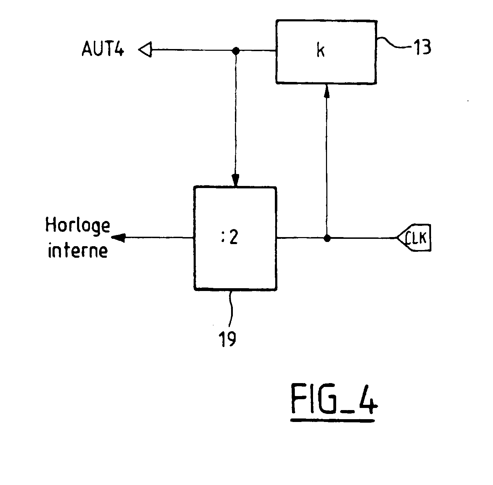

Dans un exemple représenté sur la figure 4 le scénario utilisant le signal d'horloge consiste en la détection de k cycles d'horloge. Les moyens de détection comprendront alors un compteur 13 des k cycles d'horloge, pour délivrer en sortie un signal de détection AUT4. Cette détection peut être utilisée seule ou combinée à d'autres évènements pour déclencher une modification selon l'invention.

Une modification selon l'invention peut consister à faire varier la fréquence d'horloge du circuit intégré à l'intérieur d'une plage de valeurs autorisées.

On peut alors prévoir un diviseur 19 de la fréquence horloge, par exemple un diviseur par 2 pour ralentir le circuit pendant quelques cycles horloges comme représenté sur la figure 4. Dans ce cas, il faudra prévoir la circuiterie nécessaire pour passer sans problème d'une fréquence à l'autre. Dans l'exemple, le diviseur est déclenché par le signal d'activation AUT4. On pourrait bien sûr utiliser d'autres signaux d'activation. Il s'agit bien évidement d'une liste non exhaustive d'exemples de mise en oeuvre du procédé d'authentification selon l'invention.

Un tel circuit à retard peut être réalisé par un simple circuit RC ou par des portes logiques et peut être appliqué à différents éléments internes du circuit sur un chemin d'une instruction du circuit intégré, pour produire une modification mesurable du temps de réponse. Il est dimensionné pour que la modification soit dans la plage de valeurs acceptables pour le temps de réponse concerné.

Les exemples de mise en oeuvre du procédé d'authentification selon l'invention ne sont pas exhaustifs. On comprend que de nombreuses possibilités sont offertes, qui dépendent du degré de fiabilité, et de transparence désiré et qui dépendent du circuit auquel il est appliqué.

Selon que le circuit comprend ou non un microprocesseur, une mémoire à accès série ou parallèle et selon les signaux de l'interface externe, selon la présence d'un signal d'horloge ou non, de nombreuses variantes peuvent être utilisées. Notamment, dans le cas d'une mémoire à accès série, le système applicatif pourra utiliser le signal d'accusé de réception ou de circuit occupé généralement prévu pour mesurer le temps de réponse.

Les différents circuits utilisés doivent seulement permettre un déclenchement apparemment aléatoire d'une modification d'une réponse du circuit intégré, et la modification ne doit pas mettre hors-fonctionnement le circuit, c'est à dire qu'elle doit pouvoir être ignorée, soit qu'elle concerne une donnée modifiée d'une manière connue par le système applicatif, soit qu'elle concerne une donnée modifiée de manière inconnue, auquel cas le système applicatif peut ré-exécuter l'instruction, soit qu'elle agisse sur une caractéristique (temps de réponse d'une instruction) dans la plage de valeurs admissibles de cette caractéristique.

## Revendications

1. Procédé d'authentification d'un circuit intégré dans un système applicatif, le circuit intégré recevant des instructions d'un programme applicatif mis en oeuvre par ledit système et étant apte à détecter un scénario d'activation dans la succession d'instructions du programme applicatif, caractérisé en ce qu'il consiste à utiliser les instructions normales du circuit intégré utilisées dans le programme applicatif, pour déclencher une modification temporaire d'une réponse au moins du circuit intégré sur détection d'un scénario d'activation dans la séquence des instructions reçues par le circuit intégré, ladite modification n'entraînant pas de mauvais fonctionnement du circuit intégré, et en ce qu'il consiste pour le système applicatif à détecter ledit scénario d'activation dans ledit programme applicatif qu'il met en oeuvre, pour mesurer ladite réponse de manière à vérifier ladite modification et authentifier ledit circuit intégré.

2. Procédé d'authentification selon la revendication 1, caractérisé en ce qu'il consiste à prévoir des moyens de modification d'une réponse sur le chemin d'exécution d'au moins une instruction du circuit intégré.

3. Procédé selon la revendication 1 ou 2, caractérisé en ce que la modification consiste en la variation d'un temps de réponse d'une instruction, à l'intérieur d'une plage de valeurs autorisées pour ledit temps de réponse.

4. Procédé selon la revendication 3, pour un circuit intégré comprenant une mémoire programmable électriquement caractérisé en ce que la modification consiste à faire varier la durée de la montée d'une rampe de tension de programmation appliquée à la mémoire.

5. Procédé selon la revendication 3, caractérisé en ce que la modification consiste en l'activation d'un circuit à retard (RC) sur un chemin d'exécution d'une instruction dans le circuit intégré.

6. Procédé selon la revendication 1 ou 2, caractérisé en ce que la modification porte sur le contenu des données transmises par le circuit intégré.

7. Procédé selon la revendication 6, caractérisé en ce que la modification consiste en une permutation ou inversion de bits de la donnée échangée.

8. Procédé selon l'une quelconque des revendications précédentes, caractérisé en ce qu'une modification consiste à faire varier la fréquence horloge du circuit intégré, à l'intérieur d'une plage de valeurs autorisées.

9. Procédé selon l'une quelconque des revendications précédentes, caractérisé en ce que le scénario d'activation consiste en une combinaison particulière de bits d'une adresse ou d'une donnée présentée au circuit.

10. Procédé selon l'une quelconque des revendications précédentes, caractérisé en ce que le scénario d'activation consiste en une suite d'un certain nombre d'une ou plusieurs instructions et/ou d'un certain nombre d'impulsions d'horloge.

11. procédé selon la revendication 10, caractérisé en ce qu'il consiste en outre, pour le système applicatif à ne générer une alarme qu'au bout d'un certain temps après un défaut d'authentification.

## Patentansprüche

1. Authentifizierungsverfahren für eine integrierte Schaltung in einem Anwendungssystem, wobei die integrierte Schaltung Befehle von einem von diesem System durchgeführten Anwendungsprogramm empfängt und ein Aktivierungs-Szenario in der Folge von Befehlen des Anwendungsprogramms erfassen kann, dadurch gekennzeichnet, daß es darin besteht, die normalen Befehle der integrierten Schaltung zu verwenden, die im Anwendungsprogramm verwendet werden, um eine kurzfristige Änderung mindestens einer Antwort der integrierten Schaltung bei Erfassung eines Aktivierungs-Szenarios in der Folge der von der integrierten Schaltung erhaltenen Befehle auszulösen, wobei die Änderung keinen Fehlbetrieb der integrierten Schaltung nach sich zieht, und daß es für das Anwendungssystem darin besteht, das Aktivierungs-Szenario im von ihm durchgeführten Anwendungsprogramm zu erfassen, um die Antwort so zu messen, daß die Änderung überprüft und die integrierte Schaltung authentifiziert wird.

2. Authentifizierungsverfahren nach Anspruch 1, dadurch gekennzeichnet, daß es darin besteht, Mittel zur Änderung einer Antwort auf dem Ausführungspfad mindestens eines Befehls der integrierten Schaltung vorzusehen.

3. Verfahren nach Anspruch 1 oder 2, dadurch gekennzeichnet, daß die Änderung in der Variation einer Antwortzeit eines Befehls innerhalb eines Bereichs von Werten besteht, die für diese Antwortzeit zugelassen sind.

4. Verfahren nach Anspruch 3 für eine integrierte Schaltung, die einen elektrisch programmierbaren Speicher enthält, dadurch gekennzeichnet, daß die Änderung darin besteht, die Dauer des Anstiegs einer Programmierspannungsrampe zu verändern, die an den Speicher angelegt wird.

5. Verfahren nach Anspruch 3, dadurch gekennzeichnet, daß die Änderung in der Aktivierung einer Verzögerungsschaltung (RC) auf einem Ausführungspfad eines Befehls in der integrierten Schaltung besteht.

6. Verfahren nach Anspruch 1 oder 2, dadurch gekennzeichnet, daß die Änderung den Inhalt der von der integrierten Schaltung übertragenen Daten betrifft.

7. Verfahren nach Anspruch 6, dadurch gekennzeichnet, daß die Änderung in einer Permutation oder Invertierung von Bits des ausgetauschten Datenwerts besteht.

8. Verfahren nach einem beliebigen der vorhergehenden Ansprüche, dadurch gekennzeichnet, daß eine Änderung darin besteht, die Taktfrequenz der integrierten Schaltung innerhalb eines Bereichs von zugelassen Werten zu variieren.

9. Verfahren nach einem beliebigen der vorhergehenden Ansprüche, dadurch gekennzeichnet, daß das Aktivierungs-Szenario in einer besonderen Kombination von Bits einer Adresse oder eines Datenwerts besteht, die der Schaltung präsentiert wird.

10. Verfahren nach einem beliebigen der vorhergehenden Ansprüche, dadurch gekennzeichnet, daß das Aktivierungs-Szenario aus einer Folge einer bestimmten Anzahl von einem oder mehreren Befehlen und/oder einer bestimmten Anzahl von Taktimpulsen besteht.

11. Verfahren nach Anspruch 10, dadurch gekennzeichnet, daß es weiter für das Anwendungssystem darin besteht, einen Alarm erst eine bestimmte Zeit nach einem Authentifizierungsfehler auszulösen.

## Claims

1. Method of authenticating an integrated circuit in an application system, the integrated circuit receiving instructions of an application program implemented by the said system and being able to detect an activation scenario in the succession of instructions of the application program, characterised in that it consists of using the normal instructions of the integrated circuit used in the application program, in order to trigger a temporary modification of a response at least of the integrated circuit on detection of an activation scenario in the sequence of instructions received by the integrated circuit, the said modification not giving rise to any malfunctioning of the integrated circuit, and in that it consists, for the application system, of detecting the said activation scenario in the said application program which it implements, in order to measure the said response so as to verify the said modification and authenticate the said integrated circuit.

2. Authentication method according to Claim 1, characterised in that it consists of providing means of modifying a response on the execution path of at least one instruction of the integrated circuit.

3. Method according to Claim 1 or 2, characterised in that the modification consists of the variation of a response time of an instruction, within a range of values authorised for the said response time.

4. Method according to Claim 3, for an integrated circuit comprising an electrically programmable memory, characterised in that the modification consists of varying the duration in the rise of a programming voltage ramp applied to the memory.

5. Method according to Claim 3, characterised in that the modification consists of the activation of a delay circuit (RC) on an execution path of an instruction in the integrated circuit.

6. Method according to Claim 1 or 2, characterised in that the modification relates to the content of the data transmitted by the integrated circuit.

7. Method according to Claim 6, characterised in that the modification consists of a permutation or inversion of bits of the exchanged data item.

8. Method according to any one of the preceding claims, characterised in that a modification consists of varying the clock frequency of the integrated circuit, within a range of authorised values.

9. Method according to any one of the preceding claims, characterised in that the activation scenario consists of a particular combination of bits of an address or of a data item presented to the circuit.

10. Method according to any one of the preceding claims, characterised in that the activation scenario consists of a series of a certain number of one or more instructions and/or a certain number of clock pulses.

11. Method according to Claim 10, characterised in that it also consists, for the application system, of generating an alarm only at the end of a certain time after an authentication fault.
